# EUROPÄISCHE PATENTSCHRIFT

(11) **EP 1 444 117 B1**
(45) Veröffentlichungstag und Bekanntmachung des Hinweises auf die Patenterteilung: **10.08.2005**
(21) Anmeldenummer: 02802975.9
(22) Anmeldetag: 23.09.2002
(51) Int. Cl.: B60R 21/01

(54) **VERFAHREN ZUM AKTIVIEREN VON SICHERHEITSEINRICHTUNGEN**
METHOD FOR ACTIVATING SAFETY DEVICES
PROCEDE D'ACTIVATION DE DISPOSITIFS DE SECURITE

(30) Priorität: 13.11.2001 DE 10155662
(43) Veröffentlichungstag der Anmeldung: 11.08.2004
(73) Patentinhaber: Bayerische Motoren Werke Aktiengesellschaft, 80809 München (DE)
(72) Erfinder: LINK, Andrea, 81545 München (DE); WATZKA, Willibald, 86551 Aichach (DE); URBAHN, Jan, 80797 München (DE)
(86) Internationale Anmeldenummer: PCT/EP2002/010661
(87) Internationale Veröffentlichungsnummer: WO 2003/042006

(56) Entgegenhaltungen:
- EP-A- 0 987 151
- US-A- 5 428 534
- US-A- 5 969 599
- US-A- 6 100 797
- US-B1- 6 305 709

## Beschreibung

Die Erfindung bezieht sich auf ein Verfahren zum Aktivieren von Sicherheitseinrichtungen (Airbags, Gurtstrammer, Überrollbügel, usw.) mit einem ersten Aufprallsensor zum Bereitstellen eines die Bewegung des Fahrzeugs in der longitudinalen Bewegungsrichtung wiedergebenden Bewegungssignals, mit einem zweiten Aufprallsensor zum Bereitstellen eines die Bewegung des Fahrzeugs in der lateralen Richtung wiedergebenden Bewegungssignals, und mit einer Verarbeitungseinrichtung, mittels der für eine anormale Bewegung des Fahrzeugs in longitudinaler oder in lateraler Richtung vorgesehenen Sicherheitseinrichtungen dann aktiviert werden, wenn die entsprechenden Bewegungssignale und/oder davon abgeleitete Signale definierte Schwellwerte überschreiten. Ein gattungsgemäßes Verfahren ist beispielsweise aus US-A-5,969,599 bekannt.

Unter dem Begriff "erster Sensor" ist dabei auch ein Sensorsystem zu verstehen, das aus einem eigentlichen Bewegungssensor, z.B. einem Beschleunigungssensor und einem Safingsensor oder dgl. zur Plausibilisierung der Feststellung eines relevanten Fahrzeugcrashs besteht. Das gleiche gilt für den Terminus "zweiter Sensor".

Bei bekannten Verfahren der eingangs genannten Art kann es vorkommen, dass bei einem Frontalcrash ein tatsächlich auftretender sekundärer Seitencrash nicht erkannt werden kann. Ein Frontalcrash zeigt häufig starke Schwingungen in lateraler Fahrzeugrichtung. Um eine fehlerhafte Auslösung der Seitenairbags oder dgl. zu vermeiden, wird häufig während eines Frontalcrashs die Auslösung der Seitenairbags blockiert.

Der Erfindung liegt die Aufgabe zu Grunde, ein Verfahren der eingangs genannten Art zu schaffen, bei dem ein tatsächlich auftretender sekundärer Seitencrash zu einem Auslösen der dafür eigentlich vorgesehenen Sicherheitseinrichtungen führt, gleichzeitig aber eine Fehlauslösung verhindert wird.

Die Erfindung löst diese Aufgabe mit den Mitteln des Patentanspruchs 1.

Durch das Erhöhen der für das Aktivieren der Seitenairbags maßgeblichen Schwellwerte bei einer unmittelbar vorausgehenden anormalen Bewegung des Fahrzeugs in longitudinaler Richtung werden Fehlauslösungen vermieden. Bei entsprechender Wahl des geänderten Schwellwerts lässt sich zwischen den durch einen Frontalcrash bedingten Schwingungen in lateraler Fahrzeugrichtung und den demgegenüber noch erhöhten Bewegungssignalen bei einem zusätzlichen sekundären Seitencrash unterscheiden. Gleichzeitig ist das Gesamtsystem nicht "blind" gegenüber dem sekundären Seitencrash, sondem kann diesen erkennen und durch eine entsprechende Aktivierung der dafür vorgesehenen Sicherheitseinrichtungen reagieren.

Liegt eine anormale primäre Belastung des Fahrzeugs in X-Richtung vor, so wird mit einer erhöhten Schwelle abgefragt, ob ebenfalls ein Seitencrash stattgefunden hat. Die minimale Unfallschwere zur Aktivierung der Seitenairbags liegt dann bei einer als Schwellwert vorgesehenen Eindringgeschwindigkeit eines seitlich aufprallenden "Reaktionspartner" von z. B. 30km/h. Im Vergleich dazu beläuft sich dieser Geschwindigkeitswert ohne vorausgehenden Frontalcrash auf z.B. 20km/h.

Die Verarbeitungseinrichtung bleibt somit permanent in der Lage, auch weitere schwere Seitencrashs (z. B. Euro-NCAP, SINCAP) zu erkennen, unabhängig davon, welche Belastung gerade auf das Fahrzeug wirkt. Spätestens 64ms nach einem Frontalcrash ohne nachfolgende Sekundärcrashs kann das Gesamtsystem mittels der Verarbeitungseinrichtung in den Normalzustand versetzt werden. Tritt dann wieder ein Seitencrash auf, reagiert die Verarbeitungseinrichtung wieder wie bei primärer Belastung.

## Patentansprüche

1. Verfahren zum Aktivieren von Sicherheitseinrichtungen, mit einem ersten Aufprallsensor zum Bereitstellen eines die Bewegung des Fahrzeugs in der longitudinalen Bewegungsrichtung wiedergebenden Bewegungssignals, mit einem zweiten Aufprallsensor zum Bereitstellen eines die Bewegung des Fahrzeugs in der lateralen Richtung wiedergebenden Bewegungssignals, und mit einer Verarbeitungseinrichtung, mittels der für eine anormale Bewegung des Fahrzeugs in longitudinaler oder in lateraler Richtung vorgesehenen Sicherheitseinrichtungen dann aktiviert werden, wenn die entsprechenden Bewegungssignale und/oder davon abgeleitete Signale definierte Schwellwerte überschreiten, **dadurch gekennzeichnet, dass** bei einer unmittelbar vorausgehenden anormalen Bewegung des Fahrzeugs in longitudinaler Richtung die für das Aktivieren der für anormale Bewegung in lateraler Richtung maßgebliche Schwellwerte erhöht werden.

2. Verfahren nach Anspruch 1, **dadurch gekennzeichnet, dass** die Erhöhung der Schwellwerte nach einer vorgegebenen Zeitdauer wieder zurückgenommen wird.

## Claims

1. A method of activating safety devices comprising a first impact sensor for preparing a signal representing the motion of the vehicle in a longitudinal direction, a second impact sensor for preparing a signal representing the motion of the vehicle in a lateral direction, and a processing device whereby safety devices provided in the event of abnormal motion of the vehicle in a longitudinal or lateral direction are activated when the corresponding motion signals and/or signals derived therefrom exceed defined threshold values, **characterised in that** after an immediately preceding abnormal movement of the vehicle in the longitudinal direction, the critical threshold values for activation for abnormal motion in a lateral direction are increased.

2. A method according to claim 1, **characterised in that** the increase in the threshold values is cancelled after a set time.

## Revendications

1. Procédé d'activation d'installations de sécurité comprenant un premier détecteur de collision fournissant un signal de mouvement correspondant au mouvement du véhicule dans la direction de déplacement longitudinale, un second détecteur de collision fournissant un signal de mouvement reproduisant le mouvement du véhicule dans la direction latérale et une installation de traitement qui active les installations de sécurité pour un mouvement anormal du véhicule dans la direction longitudinale ou la direction latérale si les signaux de mouvement correspondants et/ou des signaux qui sont déduits de ceux-ci dépassent des seuils définis,
**caractérisé en ce que**
pour un mouvement anormal directement antérieur du véhicule dans la direction longitudinale, on augmente les seuils déterminants pour l'activation dans la direction latérale pour un mouvement anormal.

2. Procédé selon la revendication 1,
**caractérisé en ce que**
l'augmentation des seuils est supprimée de nouveau après une durée prédéterminée.
